# EUROPEAN PATENT APPLICATION

(11) **EP 4 375 891 A1**
(43) Date of publication of application: **29.05.2024**
(21) Application number: 22846174.5
(22) Date of filing: 18.07.2022
(51) Int. Cl.: G06N 20/00, G06N 5/02

(54) **ARTIFICIAL INTELLIGENCE FEEDBACK SYSTEM AND METHOD**

(30) Priority: 19.07.2021 KR 20210094182
(71) Applicant: Korea Hydro & Nuclear Power Co., Ltd, Gyeongju-si, Gyeongsangbuk-do 38120 (KR)
(72) Inventor: LEE, Seung Chan, Daejeon 34101 (KR)
(74) Representative: Glawe, Delfs, Moll
(86) International application number: PCT/KR2022/010459
(87) International publication number: WO 2023/003304

(57) **Abstract**

An artificial intelligence (AI) feedback system is provided. The AI feedback system includes: a script extractor/executor receiving input 1, which includes basic materials for learning, and input 2, which includes key contents for learning, and generating initial conditions for popularity frequency values or ranking values of information related to input 2 from input 1; an AI connected to the script extractor/executor, the AI generating a two-dimensional (2D) information table in a matrix form with both axes for keywords and key information, respectively, based on popularity frequency values or ranking values derived from the initial conditions, adding the popularity frequency values or ranking values to corresponding coordinates of the 2D information table, and matching acquired knowledge to the corresponding coordinates; an output unit connected to the AI and outputting deep truth values derived by the AI from the 2D information table; and a repository connected to the AI, organizing and storing, by category, the context of knowledge formed by linking the deep truth values derived by the AI.

## Description

### [TECHNICAL FIELD]

The present disclosure relates to an artificial intelligence (AI) feedback system and method.

### [BACKGROUND ART]

A general learning method of an artificial intelligence (AI) takes many steps and a considerable amount of time due to accumulated patterns or the methods to realize them. The learning method of an AI requires unilaterally injected materials from external sources for the AI to accumulate knowledge and perception and involves finding a new equilibrium through the injected materials. A conventional learning method of an AI relies on receiving a vast amount of information and regression analysis classification through this information. As a result, as the learning stages progress, there are problems of an exponentially growing amount of computation and extended time.

### [DISCLOSURE]

### [Technical Problems]

To address the aforementioned problems, exemplary embodiments of the present disclosure provide an artificial intelligence feedback method and system where intuitive feedback for learning is efficiently implemented.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

### [Technical Solutions]

According to an aspect of the present invention, artificial intelligence (AI) feedback system includes: a script extractor/executor receiving input 1, which includes basic materials for learning, and input 2, which includes key contents for learning, and generating initial conditions for popularity frequency values or ranking values of information related to input 2 from input 1; an AI connected to the script extractor/executor, the AI generating a two-dimensional (2D) information table in a matrix form with both axes for keywords and key information, respectively, based on popularity frequency values or ranking values derived from the initial conditions, adding the popularity frequency values or ranking values to corresponding coordinates of the 2D information table, and matching acquired knowledge to the corresponding coordinates; an output unit connected to the AI and outputting deep truth values derived by the AI from the 2D information table; and a repository connected to the AI, organizing and storing, by category, the context of knowledge formed by linking the deep truth values derived by the AI, wherein the AI generates a 2D pseudo-linear transformation table having the same area as the 2D information table, where the ranking values of the 2D information table are quantified and each pair of coordinates is randomly on or off; generates a 2D unique characteristic table where each pair of coordinates has a characteristic vector by performing multiple pseudo-linear transformations that operating the 2D pseudo-linear transformation table, and derives information of coordinates whose characteristic vectors do not change as the deep truth values; and converts the 2D unique characteristic table into one-dimensional (1D) linear channels for multiple generations with the deep truth values mapped thereto and stores the 1D linear channels in the repository by organizing the context of knowledge formed by linking the deep truth values of each of the 1D linear channels for multiple generations, and as a number of iterations of operations increases, the 2D pseudo-linear transformation table reacts to operation transformations based on any one of directional rotation, inversion, and symmetry around a central point.

The 2D pseudo-linear transformation table may react to the operation transformations based on any one of directional rotation, inversion, and symmetry around a central point after switching an on state to 1 and an off state to 0.1.

Input 1 may include a plurality of image files, and input 2 may include contour intensities.

Input 1 may include a plurality of document files, and input 2 may include set words.

According to another aspect of the present invention, an AI feedback method includes: providing input 1, which includes basic materials for learning, and input 2, which includes key contents for learning, to a script extractor/executor; providing, by the script extractor/executor, initial conditions for popularity frequency values or ranking values of information related to input 2, obtained from input 1, to an AI; generating, by the AI, a two-dimensional (2D) information table in a matrix form with both axes for keywords and key information, respectively, based on popularity frequency values or ranking values derived from the initial conditions; adding, through intersections between the AI and the script extractor/executor, the popularity frequency values or ranking values to corresponding coordinates of the 2D information table and matching acquired knowledge to the corresponding coordinates; generating, by the AI, a 2D pseudo-linear transformation table having the same area as the 2D information table, where the ranking values of the 2D information table are quantified and each pair of coordinates is randomly on or off; generating, by the AI, a 2D unique characteristic table where each pair of coordinates has a characteristic vector by performing multiple pseudo-linear transformations that operating the 2D pseudo-linear transformation table, and deriving information of coordinates whose characteristic vectors do not change as the deep truth values; and converting, by the AI, the 2D unique characteristic table into one-dimensional (1D) linear channels for multiple generations with the deep truth values mapped thereto and storing the 1D linear channels in a repository by organizing the context of knowledge formed by linking the deep truth values of each of the 1D linear channels for multiple generations, wherein as a number of iterations of operations increases, the 2D pseudo-linear transformation table reacts to operation transformations based on any one of directional rotation, inversion, and symmetry around a central point.

The 2D pseudo-linear transformation table may react to the operation transformations based on any one of directional rotation, inversion, and symmetry around a central point after switching an on state to 1 and an off state to 0.1.

### [Advantageous Effects]

The artificial intelligence (AI) feedback system and method according to the present invention can provide the following advantages.

An AI feedback system where intuitive feedback for learning is efficiently implemented can be provided.

### [BRIEF DESCRIPTION OF DRAWINGS]

FIG. 1 is a flowchart illustrating an artificial intelligence (AI) feedback method according to an embodiment of the present invention.
FIGS. 2 through 7 are drawings for explaining the AI feedback method according to an embodiment of the present invention.
FIG. 8 is a drawing illustrating the AI feedback system according to another embodiment of the present invention.
FIGS. 9 and 10 are drawings illustrating the AI feedback system according to another embodiment of the present invention.
FIG. 11 is an image illustrating image-based training using an AI feedback method and an AI system.
FIG. 12 is an image illustrating document-based training using an AI feedback method and an AI system.
FIG. 13 is a drawing illustrating an AI feedback system according to another embodiment of the present invention based on FIG. 9.
FIGS. 14 through 19 are drawings illustrating an AI feedback system according to another embodiment of the present invention based on FIG. 8.
FIG. 20 is a diagram showing the results of AI training with at least some of the procedures depicted in FIGS. 13 through 19 reflected therein.

### [BEST MODES FOR CARRYING OUT THE INVENTION]

Preferred embodiments of the present invention will hereinafter be described in detail with reference to the accompanying drawings. The advantages and features of the present invention, and the methods to achieve them, will become clear by referring to the embodiments detailed with the accompanying drawings. However, the present invention is not limited to the embodiments disclosed below but can be implemented in various different forms. These embodiments are provided to make the disclosure of the present invention complete and to fully inform those skilled in the art to which the present invention pertains. The present invention is defined by the scope of the claims. Throughout the specification, the same reference numerals denote the same components.

Spatially relative terms such as "below," "beneath," "lower," "above," "upper," etc., can be used to facilitate the description of the relationships between one object or components and another as shown in the drawings. These spatially relative terms should be understood to encompass different orientations of the subject matter in use or operation in addition to the orientation depicted in the drawings. For example, if the subject matter in the drawings is turned over, an object described as "below" or "beneath" another object may be above the other object. Thus, the exemplary term "below" may include both upward and downward directions. Objects may be oriented in other directions, and thus, spatially relative terms may be interpreted according to the orientation.

Although terms like "first," "second," etc., are used to describe various objects, components, and/or sections, these objects, components, and/or sections should not be limited by these terms. These terms are only used to distinguish one object, component, or section from another. Therefore, a "first" object, component, or section mentioned below in the technical spirit of the present invention may be a "second" object, component, or section.

Terms used in this specification are for the purpose of describing particular embodiments only and are not intended to be limiting of the present invention. In this specification, singular forms are intended to include plural forms as well, unless the context clearly indicates otherwise. The terms "comprises" and/or "comprising," when used in this specification, specify the presence of stated features, steps, operations, elements, and/or components, but do not preclude the presence or addition of one or more other features, steps, operations, elements, components, and/or groups thereof.

Unless otherwise defined, all terms (including technical and scientific terms) used herein can be understood to have the meaning commonly understood by those of ordinary skill in the art to which this invention pertains. Terms defined in a commonly used dictionary are to be interpreted as having a standard meaning and not overly or excessively interpreted, unless explicitly defined otherwise.

Embodiments of the present invention will hereinafter be described in detail with reference to the attached drawings. Identical or corresponding components are given the same reference numerals, and redundant descriptions thereof will be omitted.

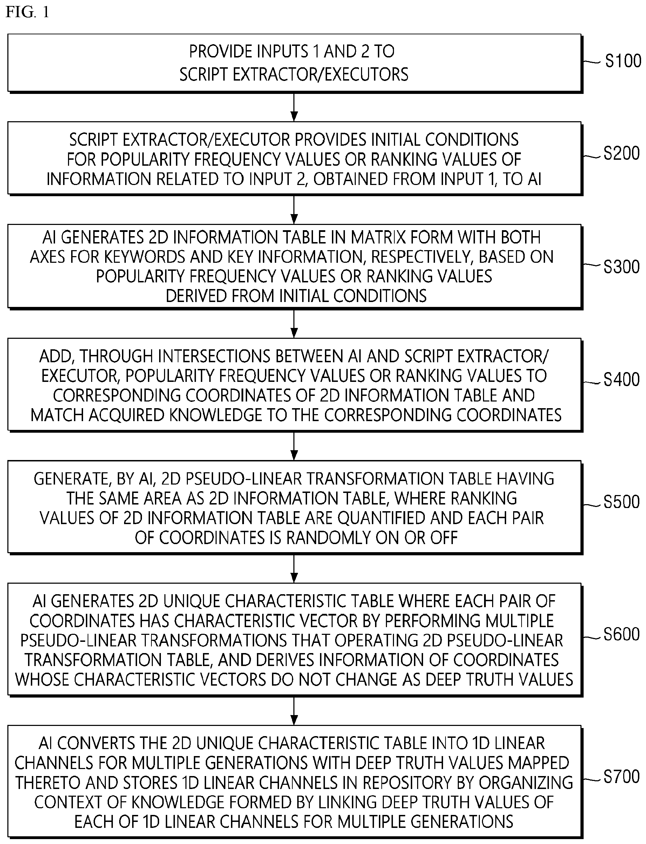

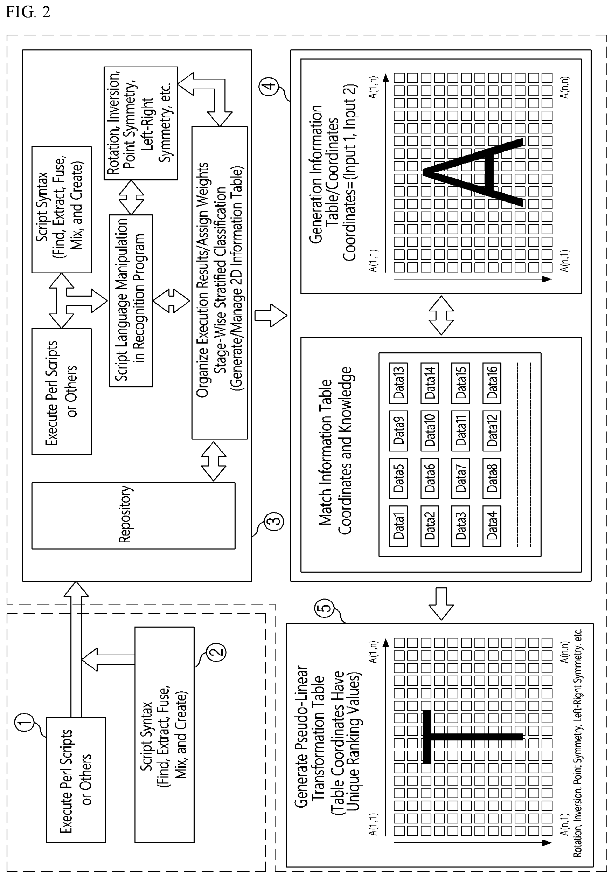

FIG. 1 is a flowchart illustrating an artificial intelligence (AI) feedback method according to an embodiment of the present invention. FIGS. 2 through 7 are drawings for explaining the AI feedback method according to an embodiment of the present invention.

Referring to FIGS. 1 and 2, inputs 1 and 2 are provided to a script extractor/executor (S 100). Specifically, referring to ① and ② of FIG. 2, input 1, which includes basic materials for learning for an AI, and input 2, which includes key contents for learning, are provided to the script extractor/executor.

For example, input 1 may include a plurality of image files, and input 2 may include the intensity of outlines. However, the present invention is not limited to this. Alternatively, input 1 may include a plurality of document files, and input 2 may include set words. However, the present invention is also not limited to this.

This is the stage where inputs 1 and 2, which are materials to be learned by recognition intelligence or to train recognition intelligence with, are presented. These inputs consist of basic materials for learning by the AI, where input 1 mainly includes document files (e.g., text information such as 'pdf' or `txt' files) and image files (e.g., image information such as `jpg' or 'png' files) and input 2 mainly includes keywords or key contents to be learned by the AI.

For example, if input 1 is a document file, input 2 may be key terms, and if input 1 is an image file, input 2 may be the gradation or outlines of an image. Thereafter, the script extractor/executor provides the AI with initial conditions for popularity frequency or ranking values for information related to input 2 from input 1 (S200).

Specifically, referring to (3) of FIG. 2, the script extractor/executor provides the AI with initial conditions for the popularity frequency or ranking values of information related to input 2 from input 1.

The script extractor/executor may include a program for extracting and executing scripts such as Perl, Java, or a language script analyzer. The script extractor/executor provides recognition intelligence with initial conditions for popularity frequency or ranking values for information related to key terms or contents based on the content of input 2 among the initial learning materials.

Thereafter, the AI generates a two-dimensional (2D) information table A in matrix form with both axes for keywords and key information, respectively, based on the popularity frequency or ranking values derived from the initial conditions (S300).

Specifically, referring to ① and ② of FIG. 2, the AI generates the 2D information table A, which is in matrix form with one axis for keywords and the other axis for key information based on the popularity frequency or ranking values derived from the initial conditions provided by the script extractor/executor. The AI prepares to generate an initial 2D information table A based on information on initial popularity frequency or ranking values.

The AI generates the 2D information table A, which is a 2D orthogonal table coordinate system, using keywords and key contents found from document files or image files based on the initial popularity frequency or ranking values. The 2D information table A may have a structure similar to a matrix, and may be a 2D orthogonal table coordinate system with keywords and key information as the x-axis and the y-axis, respectively.

Thereafter, through the interaction between the AI and the script extractor/executor, popularity frequency or ranking values are added to corresponding coordinates of the two-dimensional information table, and the knowledge acquired by the AI is matched at the corresponding coordinates (S400).

Specifically, referring to (3) of FIG. 2, through interactions between artificial intelligence and the script extractor/executor, popularity frequency or ranking values are added to corresponding coordinates of the 2D information table, and the knowledge acquired by the AI is matched at the corresponding coordinates.

Through interactions between the AI and the script extractor/executor, popularity frequency, significance, or ranking values are added to corresponding coordinates of the 2D information table, which is a 2D orthogonal table coordinate system information table, and the knowledge acquired by the AI may be matched and managed at the corresponding coordinates.

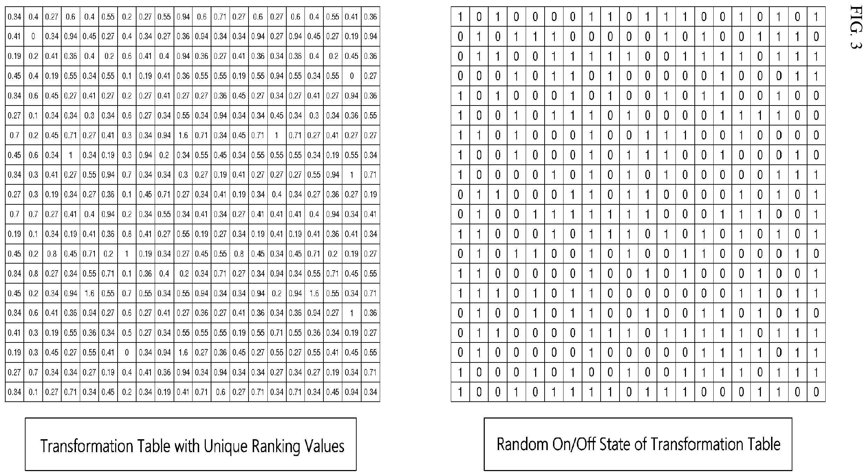

Thereafter, referring to FIGS. 2 and 3, the AI generates, from the 2D information table A, a 2D pseudo-linear transformation table T of the same area, where the ranking values of the 2D information table A are quantified and each pair of coordinates is randomly turned on or off (S500).

Specifically, referring to (5) of FIG. 2 and FIG. 3, the AI generates, from the 2D information table A, the 2D pseudo-linear transformation table T of the same area, where the ranking values of the 2D information table A are quantified and each pair of coordinates is randomly turned on or off.

The AI creates the 2D pseudo-linear transformation table T with the same size as the 2D information table A. The AI projects and thereby quantifies the ranking values of the information in the 2D information table A onto corresponding coordinates of the 2D pseudo-linear transformation table T, and the 2D pseudo-linear transformation table T, where the quantified values of the coordinates are maintained while ensuring that the coordinates are on or off randomly without any specific pattern or predictability. The 2D pseudo-linear transformation table T created by the AI is an operational table for performing pseudo-linear transformations.

FIG. 3 shows how the AI generates and configures each stage of a 2D pseudo-linear transformation table, which is used in computation during feedback and derivation processes, in stages.

Each stage of the 2D pseudo-linear transformation table is configured to maintain their ranking values. To create random on- and off-states in the same coordinate system, a 2D pseudo-linear transformation table where each pair of coordinates is randomly assigned either 1 or 0 in an unpredictable, random manner is generated. For example, by multiplying the corresponding sets of coordinates of the left and right tables in FIG. 3, random on- and off-states may be generated in the 2D pseudo-linear transformation table.

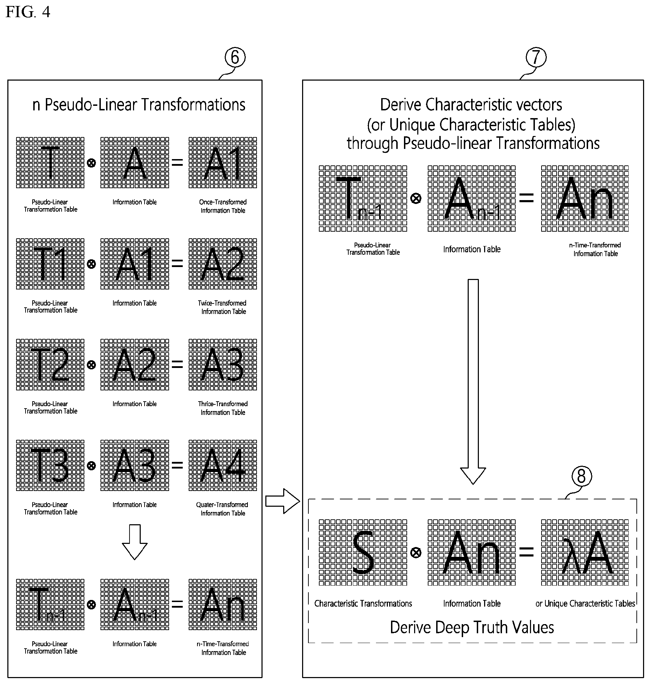

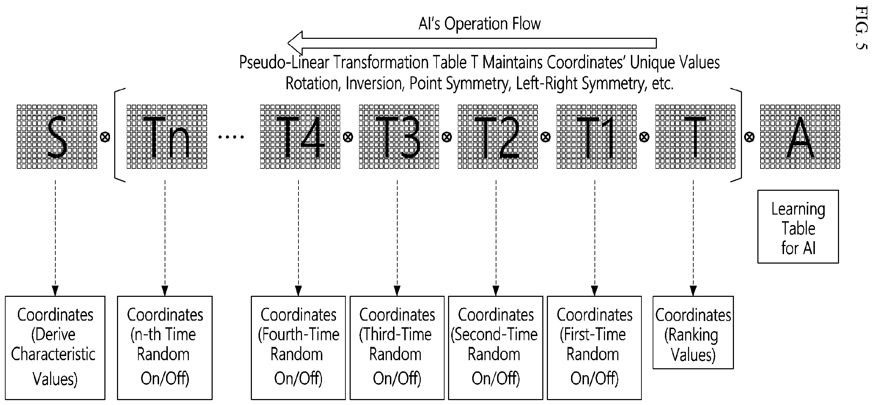

Thereafter, referring to FIGS. 4 and 5, the AI forms a 2D unique characteristic table where each pair of coordinates has a characteristic vector by performing multiple pseudo-linear transformations that operate the 2D pseudo-linear transformation table T on the 2D information table A, and derives information of coordinates whose characteristic vectors have not changed as deep truth values (S600).

Specifically, referring to ⑥, ⑦, ⑧ of FIG. 4 and FIG. 5, when the 2D pseudo-linear transformation table T is operated n times on the 2D information table A, an effect similar to that of a matrix operation is produced. In the process of operating the 2 pseudo-linear transformation table T on the 2D information table A multiple times, the 2D information table A is transformed into a 2D unique characteristic table with characteristic vectors, and information that remains unchanged and survives to the end is derived as deep truth values that substantially do not fluctuate.

When the 2D pseudo-linear transformation table T is operated on the 2D information table A n times in each iteration, it amounts to performing n pseudo-linear transformations. Here, the 2D pseudo-linear transformation table T, unlike a typical matrix operation, is generated by multiplying sets of elements at the same positions, and each pair of coordinates randomly turns on and off.

Meanwhile, a 2D pseudo-linear transformation table and an orthogonal table of the same area that produces random on- and off-states may derive truth values through operations even when calculated to enable arbitrary rotations of 90, 180, 270, or 360 degrees, and truth values can be derived through these operations. Referring to ⑥ of FIG. 4, it can be identified that n pseudo-linear transformations are performed.

Referring to ⑦ of FIG. 4, the values of the pseudo-linear-transformed 2D unique characteristic table are composed of characteristic vectors and characteristic values that either do not change any longer or are closest to truths. This involves finding only necessary information from the coordinates of the initial 2D information table such that only coordinates that are considered true remain, and information matched to the remaining coordinates becomes the deep truth values.

Referring to ⑧ of FIG. 4, the derivation of the deep truth values is similar to finding eigenvalues and eigenvectors in a matrix, but differs from a matrix operation in that it involves performing a pseudo-linear transformation by multiplying, one-to-one, the coordinates of a 2D a pseudo-linear transformation table with each coordinate value randomly on or off, marked with unique ranking values, and the corresponding coordinates of a 2D information table of the same area for each stage.

Referring to FIG. 5, the processes depicted in ⑥, ⑦, and ⑧ of FIG. 4 are summarized as a series of continuous operations for a T table for the pseudo-linear transformation of a 2D coordinate table, which is composed of the coordinate system of the original 2D information table and its corresponding coordinate values, into the same dimension, and can be viewed as a continuous combination of operations for an S table for characteristic table operations aimed at finding characteristic values or deep truth values.

This conceptually demonstrates how the knowledge and learning content of the AI, matched at each coordinate value of such 2D coordinate table, survive heavily in the coordinate system and are derived as deep truth values. In n pseudo-linear transformations, unique ranking values may or may not be given to the respective coordinates depending on the random on/off state of each coordinate value.

Specifically, in each iteration, each coordinate value switches between an on state and an off state. Thus, only coordinate values in the on state are maintained, while those in the off state are treated as zero. This means that the coordinate values in the off state do not affect the corresponding coordinates of the 2D information table where knowledge is matched during that iteration, rendering the knowledge at the corresponding coordinates as unimportant, while only the information at coordinates that are in the on state is recognized as being as much important as the weight of their corresponding ranking values.

As a result, since the on/off states for each iteration vary randomly during n pseudo-linear transformations, it acts as an unpredictable popularity vote. Therefore, if coordinates survive to the end to have relatively high significance and ranking values, their states are reflected so that a unique characteristic table and characteristic values are selected through operations by the unique characteristic table.

This operates similarly to finding eigenvalues and eigenvectors in a matrix to determine ranks. However, this is different from matrix operations because it produces a table by operating a transformation table and a knowledge information table at the same locations. In other words, the process of finding the unique characteristic table is inventive.

As described above, the AI learns the ultimate deep truth values from inputs 1 and 2 by using the AI feedback method according to an embodiment of the present invention. Moreover, a 2D unique characteristic table transformed from a 2D information table by the AI feedback method according to an embodiment of the present invention generates a first-generation information table layer.

Through the process of learning from other information and finding deep truth values by the AI feedback method, second-, third-, fourth-, and n-th-generation 2D information table layers are generated. For easier comparison and analysis using the generated 2D information table layers, the AI may convert an (n×n) dimensional coordinate system into a linear form with (n×n) channels for comparison and analysis, and this allows for linear mapping of a 2D coordinate system.

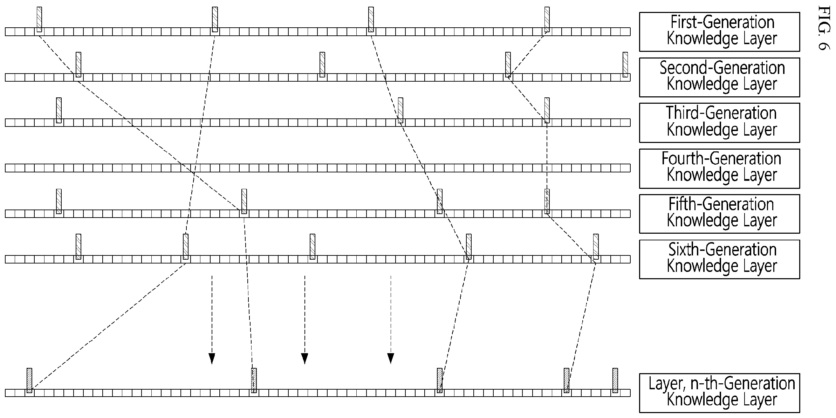

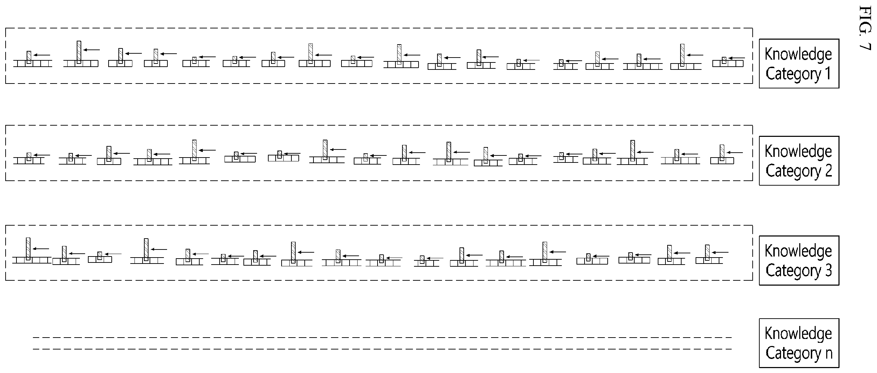

Thereafter, referring to FIGS. 6 and 7, the AI converts the 2D unique characteristic table into one-dimensional (1D) linear channels for multiple generations (ranging from a first-generation knowledge layer to an n-th generation knowledge layer), with deep truth values mapped thereto, stores the 1D linear channels in a repository, and organizes and stores the deep truth values of each of the 1D linear channels for multiple generations (ranging from the first-generation knowledge layer to the n-th generation knowledge layer) by category (ranging from knowledge category 1 to knowledge category n) in the repository (S700).

Specifically, referring to FIG. 6, the AI forms the context of information and knowledge by converting all the 2D coordinates of the 2D unique characteristic table into 1D linear channels for multiple generations (ranging from the first-generation knowledge layer to the n-th generation knowledge layer) with linear channel values, mapping and filling deep truth values into corresponding 1D linear channels, and linking the deep truth values of the 1D linear channels for multiple generations.

For example, if the 2D unique characteristic table composed of deep truth values acquired the AI from each generation is an (n×n) 2D coordinate system, the coordinates may be mapped to (n×n) linear channels. Referring to FIG. 6, channels with deep truth values for each generation, marked with red bars, may be connected with the values of the knowledge layer with deep truth values associated with the next generation. By associating several knowledge layers in this manner, the context of knowledge can be inferred and formed.

Then, referring to FIG. 7, the AI categorizes and stores major information that forms the context of information and knowledge in the repository by category (ranging from knowledge category 1 to knowledge category n), thereby constructing a systematized body of knowledge. For example, the AI may organize, by category, the knowledge constructed by the context of deep truth values or deep knowledge connected across several generations, using the repository.

The AI feedback method according to an embodiment of the present invention can efficiently accumulate knowledge from the beginning by establishing a coordinate system based on initial input data and core keywords through inputs 1 and 2, assigning a relative ranking value such as frequency or priority to each coordinate value, and matching and accumulating the knowledge discovered by the AI in the coordinate system and coordinate values constructed in a 2D coordinate table.

Therefore, the AI feedback method according to an embodiment of the present invention is more efficient that its conventional counterparts in achieving the ultimate goal of deriving deep truth values and reaching final conclusions. The AI feedback method according to an embodiment of the present invention not only can conceptually implement this process to analyze and process information, helping the AI to reach the final conclusions more efficiently. Moreover, the AI feedback method according to an embodiment of the present invention can be utilized as a core technology based on the construction of AI knowledge, and thus, the efficacy of the AI feedback method according to an embodiment of the present invention can be enhanced.

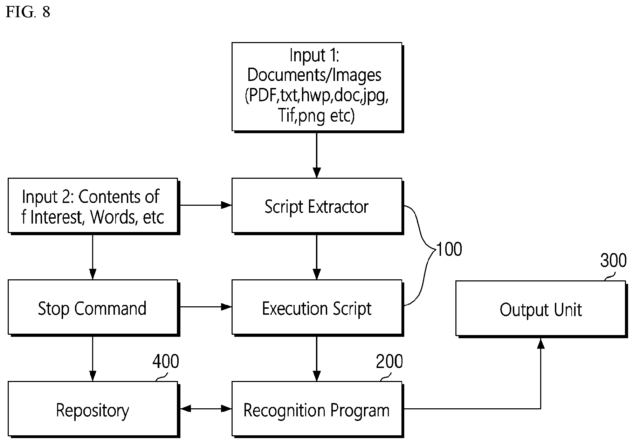

That is, an AI feedback method that efficiently implements intuitive feedback for learning is provided. An AI feedback system according to another embodiment of the present invention will hereinafter be described with reference to FIGS. 8 through 10. The AI feedback system according to another embodiment of the present invention may perform the aforementioned AI feedback method according to an embodiment of the present invention, but the present invention is not limited thereto.

FIG. 8 is a drawing illustrating the AI feedback system according to another embodiment of the present invention. Referring to FIG. 8, the AI feedback system according to another embodiment of the present invention includes a script extractor/executor 100, an AI 200, an output unit 300, and a repository 400. The script extractor/executor 100 receives input 1, which includes basic materials for learning, and input 2, which includes key contents for learning, and generates initial conditions for popularity frequency values or ranking values for information related to input 2 from input 1.

The AI 200 is connected to the script extractor/executor 100, generates a 2D information table in the form of a matrix with both axes for key words and key information, respectively, based on the popularity frequency or ranking values derived from the initial conditions, adds the popularity frequency or ranking values to corresponding coordinates of the 2D information table, and matches knowledge acquired by the AI at the corresponding coordinates. The AI 200 generates, from the 2D information table, a 2D pseudo-linear transformation table of the same area, where the ranking values of the 2D information table are quantified and each pair of coordinates is randomly turned on or off. The AI 200 forms a 2D unique characteristic table where each pair of coordinates has a characteristic vector by performing multiple pseudo-linear transformations that operate the 2D pseudo-linear transformation table on the 2D information table, derives information on coordinates whose characteristics vectors do not change, among the coordinates of the 2D unique characteristic table, as deep truth values, converts the 2D unique characteristic table into 1D linear channels for multiple generations with the deep truth values mapped thereto, stores the 1D linear channels in the repository 400, and organizes and stores, by category, the context of knowledge formed by linking the deep truth values of each of the 1D linear channels for multiple generations in the repository 400.

The output unit 300 is connected to the AI 200 and outputs the deep truth values derived by the AI from the 2D information table. The repository 400 is connected to the AI 200 and organizes and stores, by category, the context of knowledge formed by linking the deep truth values derived by the AI.

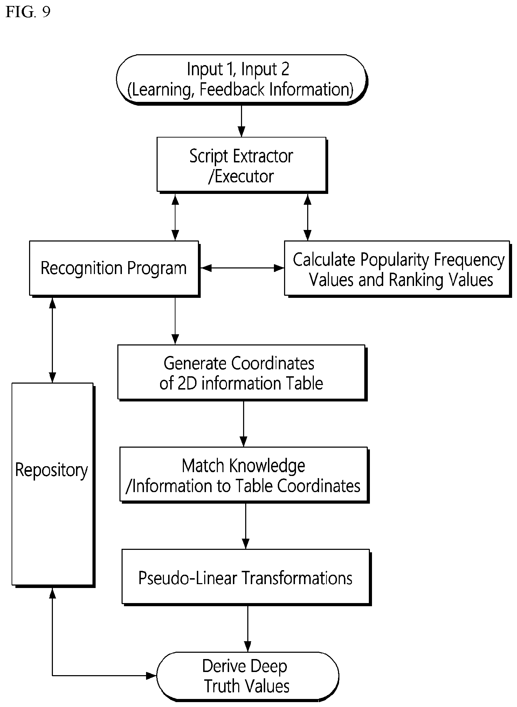

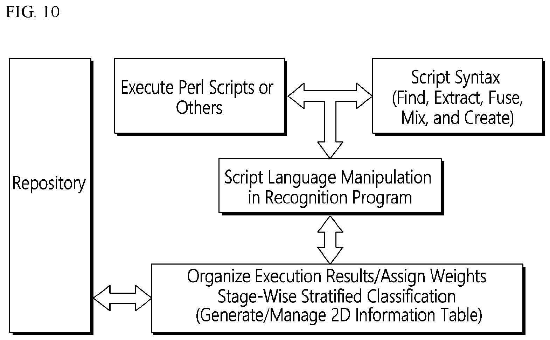

FIGS. 9 and 10 are drawings illustrating the AI feedback system according to another embodiment of the present invention. FIGS. 8 and 9 show input 1, which is information on a document or an image corresponding to initial input for learning for a recognition program corresponding to the AI, and input 2, which corresponds to priority keywords that need to be primarily addressed. The recognition program corresponding to the AI interacts with the script extractor/executor, which provides means for a dialogue with or a review of input materials. The script extractor/executor is utilized by the recognition program to extract necessary data and calculate frequency values using a system language such as Perl scripts for searching for powerful documents or input file information. Perl scripts may perform functions such as word extraction, adjacent word extraction, basic searching and statistics for sentence similarity, etc.

The AI collects and performs feedback on analytical data through a special interface of the embedded script syntax and stores a 2D information table with particular information or the results of learning of the 2D information table to be matched to coordinates of a 2D coordinate table. The 2D coordinate table may be based on coordinates with information axes for inputs 1 and 2. The information axes may be converted into vertical lines for the convenience of calculation. A stop command is executed to set initial conditions for how many iterations of learning the AI needs to perform. If no particular initial conditions are given, the AI, the recognition program, undergoes n pseudo-linear transformations until values in a characteristic vector table or a characteristic table hardly change, as in continuing learning until finding deep truth values that do not need any further feedback or computation, by calculating the eigenvalues and eigenvectors of a matrix.

The AI operates in this manner in the absence of no particular input for the stop command. However, if the stop command is given, the Al's learning and operation are concluded along with the stop command, and deep truth values, which are the results of learning, are output to the output unit. Here, the AI may construct a systematized body of knowledge by organizing and storing, by category, the context of knowledge obtained by linking the deep truth values in the repository.

FIG. 10 conceptually shows how the extraction of a script, the execution of the script, and the AI, which is the recognition program, interact. It can be seen that the recognition program, which is the AI, searches for and analyzes necessary information and words by manipulating a script language.

Thus, the recognition program continuously feed itself back using the script extractor/executor with inputs 1 and 2, generates a 2D information table and a 2D table coordinate system to create a coordinate distribution of knowledge with the importance of the knowledge in the form of popularity frequency values or ranking values, stores specific sentence information for such coordinates in a separate coordinate system of the same size, and continuously accumulates information matched to the coordinates. All the aforementioned information may be stored in the repository by the AI.

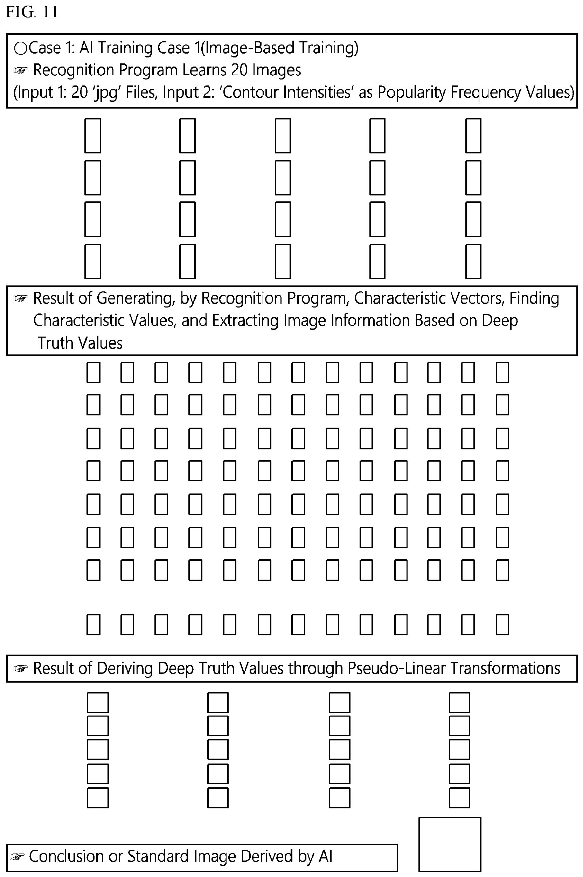

As an exemplary learning using an AI feedback method and an AI system, image-based training will hereinafter be described with reference to FIG. 11. FIG. 11 is an image illustrating image-based training using an AI feedback method and an AI system.

Referring to FIG. 11, image-based training may involve identifying features of `jpg' files to derive deep truths and creating an image by finding comprehensive commonalities. Specifically, `jpg' files with a predetermined pixel size are learned. For the features of each image file, a precondition is given as: popularity frequency values such as contours are emphasized (similarly to weighting variables); and other features are considered non-essential. Since an image file is considered a type of document, the recognition program recognizes each pixel's value, self-calculates their popularity frequency values, and accumulates values for each pixel. After the lapse of a predetermined amount of time, characteristic values are given based on cumulative distribution values, and ranking values are reassigned based on the ranks of the characteristic values. Here, the ranking values serve a similar role to weights.

Each pixel may be matched to a set of coordinates in a matrix-shaped table on a plane. The matrix-shaped table has a distribution of information values for an image. While maintaining the ranking values of pixels for information values from a matrix-shaped table created by the recognition program, a matrix-shaped random table of the same dimension, which may or may not be displayed randomly with ranking values at its coordinates, is created based on the information values, and is then operated as a linear transformation for a matrix to find deep truth values.

When the script executor performs a linear transformation with each random table, each transformed table generates characteristic vectors indicating deep truth values, and the characteristic vectors behave similarly to eigenvalues and eigenvectors of a matrix. Once the characteristic vectors are generated, they are ranked based on their magnitude, emphasizing pixels of an image that represent the characteristics of the image, and completing a type of deep truth finding process. Then, the result becomes a standard image completed by finding commonalities from all the learned images.

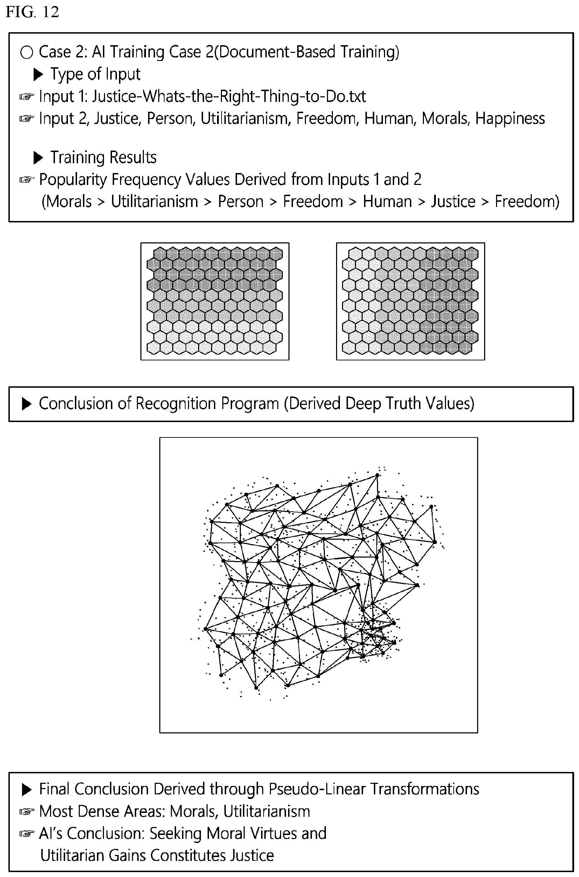

As another exemplary learning using an AI feedback method and an AI system, document-based training will hereinafter be described with reference to FIG. 12. FIG. 12 is an image illustrating document-based training using an AI feedback method and an AI system.

Referring to FIG. 12, document-based training may involve creating deep truths by finding relevance through 'txt' documents. Specifically, documents with a predetermined size, for example, `txt' files, are selected and learned. This learning process involves entering the `txt' files as input 1 and entering keywords or items of interest as input 2. The frequency distributions of keywords and sentences including the keywords are found based on given topics or words are found to assign frequency-based characteristic values.

Keywords are matched to a matrix-shaped table to create layers of knowledge for learning, and their frequency distributions are matched to corresponding coordinates. In this embodiment of the present invention, about seven keywords are listed, and a 7×7 matrix-shaped table is established in consideration of combinations of three words to create coordinate values with related words as axes (represented numerically in the coordinate system). Each pair of coordinates is assigned a popularity frequency-based ranking value. Then, the recognition program recognizes the value of each pair of coordinates, self-calculates the popularity frequency value of each pair of coordinates, and accumulates values for each corresponding set of coordinates.

After the lapse of a predetermined amount of time, characteristic values are given based on cumulative distribution values, and ranking values are reassigned based on the ranks of the characteristic values. Here, the ranking values serve a similar role to weights. Each pair of coordinates may be matched to a matrix-shaped table on a plane, and the matrix-shaped table has a distribution of information values for the respective coordinates. While maintaining the ranking values of pixels for information values from a matrix-shaped table created by the recognition program, a matrix-shaped random table of the same dimension, which may or may not be displayed randomly with ranking values at its coordinates, is created based on the information values, and is then operated as a linear transformation for a matrix to find deep truth values.

After the lapse of a predetermined amount of time, characteristic vectors that maintain the ranking values of the respective coordinates, but randomly represent the values are generated, behaving similarly to eigenvalues and eigenvectors in a matrix. Once the characteristic vectors are generated, they may be ranked based on their magnitude, emphasizing meaningful sentences including the keywords in the 'txt' files or documents, and completing a type of deep truth finding process through combination or fusion. Then, the result is a comprehensive conclusion derived from the learned documents.

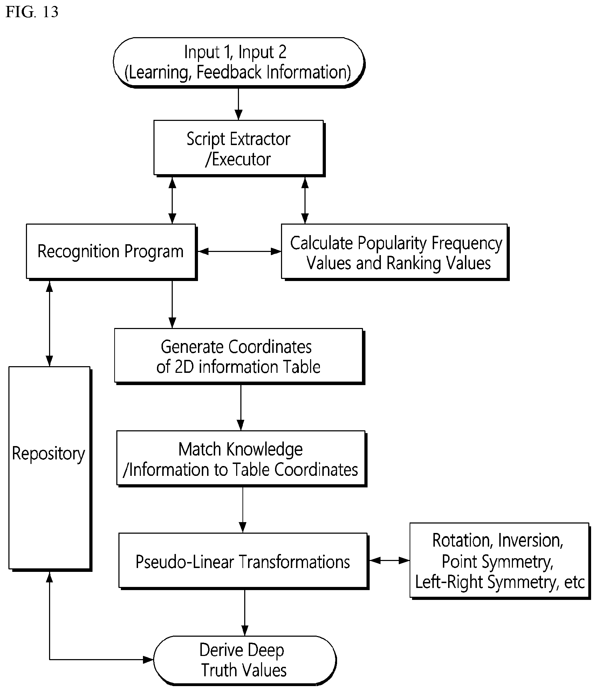

FIG. 13 is a drawing illustrating an AI feedback system according to another embodiment of the present invention based on FIG. 9. Referring to the previously mentioned content and FIG. 13, the implementation of an AI feedback system involves having a separate repository, using the repository to share accumulated knowledge over generations, and creating the tradition and context of knowledge by linking pieces of knowledge that are highly influential between generations.

The present invention adds an additional procedure for acquiring enhanced feedback and deep truth values, while maintaining the functions of an AI feedback system. Thus, the method pursued in the present invention requires ten steps. The additional procedure varies methods for table operations. To ensure that truth values other than zero remain non-zero, the additional procedure of the present invention involves creating an operation table where relatively small values that are not zeros serve as substitutes for zeros, for continuity in table operations. The present invention adds a method of replacing each value that may become zero with, for example, 0.1. In this manner, a structure for responding to any operation transformation and obtaining deep truth values as the number of operations increases, regardless of whether a table that functions as an operator is rotated, or reversed 180 degrees, or turned upside down, with or without using the symmetry around the central point, can be established.

The first step is a step where inputs 1 and 2, which are materials to be learned by the recognition program (i.e., the AI) or train the AI with, are prepared. These inputs consist of basic materials for the AI's learning. Input 1 mainly consists of document files (such as `pdf' or `txt' files including character information) and image files (such as 'jpg' or 'png' files containing image information), and input 2 mainly includes keywords or key contents to be learned by the AI. For example, input 2 may be key thematic words for document files and gradation or image contours for image files.

In the second step, which is a step for the script extractor/executor, initial conditions for popularity frequency values or ranking values of information related to the key thematic words or key contents are given to the recognition program (i.e., the AI), from among the initial learning materials. In the third step, which is a step where the recognition program operates, the recognition program prepares to generate an initial 2D information table based on information on initial popularity frequency or ranking values.

The fourth step is a step where the recognition program (i.e., the AI) generates a 2D information table. In this stage, a 2D orthogonal table coordinate system, which is also referred to as a 2D information table, is generated with the key thematic words and and key contents found from documents/image files using the initial popularity frequency or ranking values. While its structure is similar to that of a matrix that we are familiar with, this table becomes a 2D table coordinate system with axes for keywords and key information.

The fifth step is a step where through interactions between the AI and the script extractor/executor within the 2D table coordinate system, popularity frequencies, significances, or ranking values for corresponding coordinates are rated in the coordinate system, and knowledge acquired by the AI is managed by being matched to the corresponding coordinates.

The sixth step involves creating a 2D table of the same size as the 2D information table, directly projecting and thereby quantifying ranking values corresponding to the information at each pair of coordinates in the 2D information table, setting each pair of coordinates to a random on/off state while maintaining their numerical values. The 2D table generated in this step is an operation table for performing pseudo-linear transformations.

The seventh step is a step for deriving results through pseudo-linear transformations. In this step, multiple operations with the 2D table for pseudo-linear transformations result in an effect similar to that of matrix operations. During these multiple operations, the 2D information table is transformed into a characteristic information table with characteristic vectors, and information that remains unchanged and survives to the end is derived as deep truth values that are almost invariant.

In this manner, the AI finds the ultimate deep truth values through inputs 1 and 2, and the formed 2D information table constitutes a first-generation information table layer. Similarly, by learning other information to find deep truth values, the AI generates second-, third-, fourth-, and n-th-generation 2D information table layers.

The eighth step ensures that various transformations can be performed between stages to further strengthen previously-executed operations during multiple operations with the 2D table for pseudo-linear transformations. These transformations may involve any form of transformation operation such as a rotation, symmetry, point symmetry, axis symmetry, or inversion, as illustrated in FIG. 1.

Here, the transformation operation involves replacing each value in the table that is originally processed as zero with a very small value of approximately 0.1. This helps mitigate the relative reduction of values that have survived various transformation operations when applying cumulative values. By additionally inserting such various transformation operations, it becomes possible to derive more enhanced cumulative truth values when creating the second-, third-, fourth-, and n-th-generation 2D information table layers.

The ninth step is a step where the recognition program converts all 2D coordinates of 2D information table layers into linear channel values using the repository, maps and fills deep truth values into the corresponding linear channels, and link channels for generations to create the context of information/knowledge. The tenth step is the process of constructing a systematized body of knowledge by dividing, by knowledge category, important information that constitutes the context of the information/knowledge in the repository.

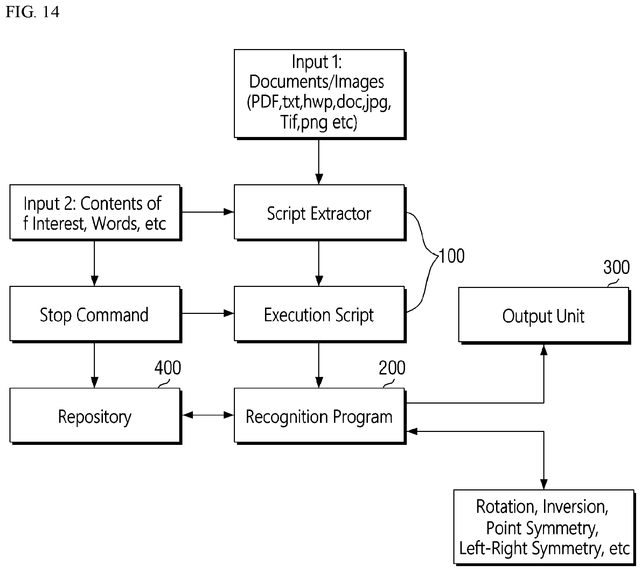

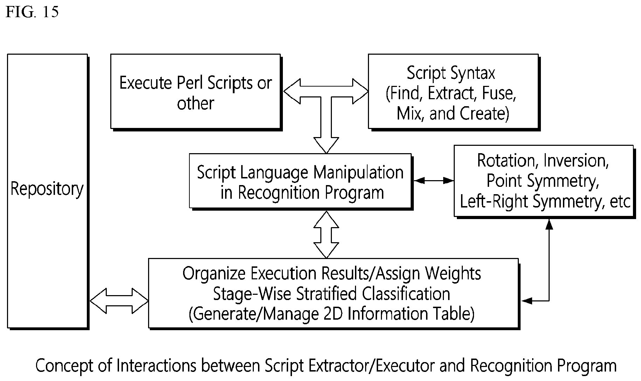

FIGS. 14 through 18 are drawings illustrating an AI feedback system according to another embodiment of the present invention based on FIG. 8. Referring to the previously mentioned content and FIGS. 14 through 18, FIG. 14 illustrates the basic conceptual structure of a system implementing the previously shown invention. FIG. 15 illustrates how the script extractor/executor and the recognition program (i.e., the AI) interact.

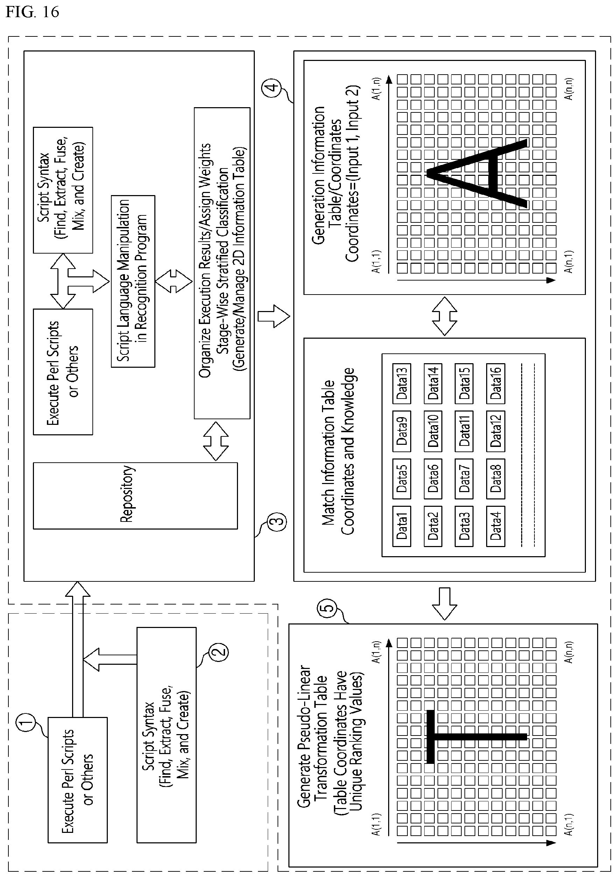

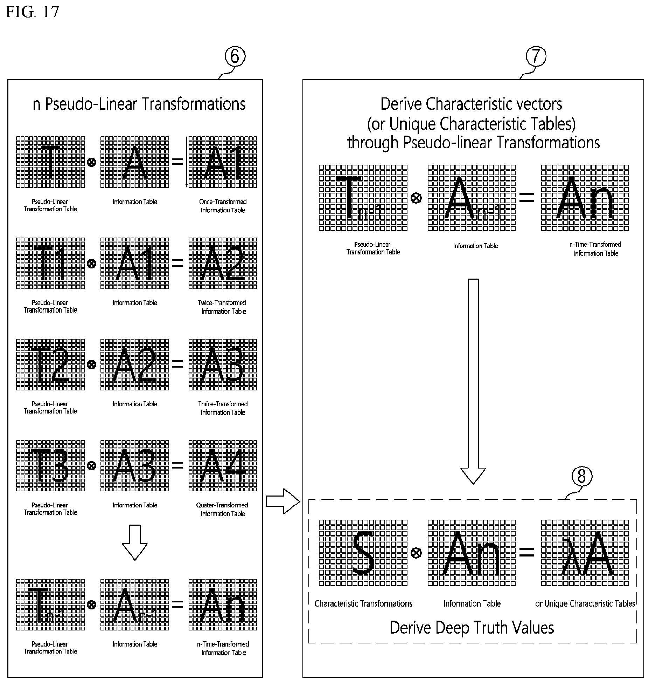

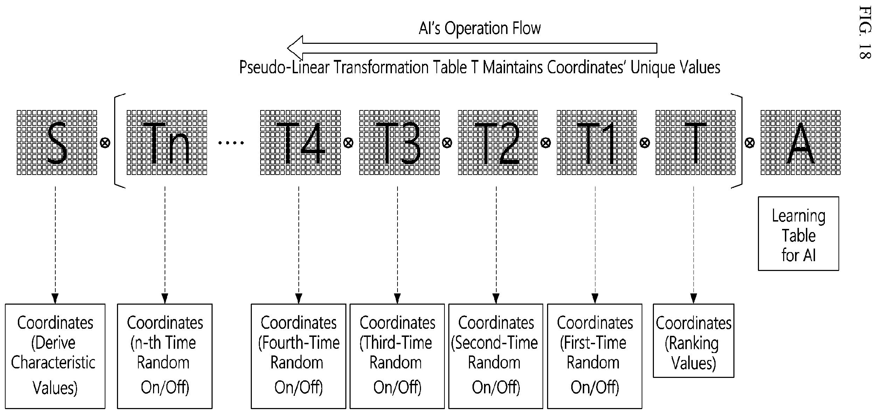

FIGS. 16 and 17 illustrate the operational concept and detailed composition of an AI feedback system. FIG. 18 illustrates how deep truth values are reached using a 2D coordinate table A, which shows the distribution of significance or popularity frequency values obtained by the AI's learning information according to popularity frequency or importance along the coordinate axes for inputs 1 and 2.

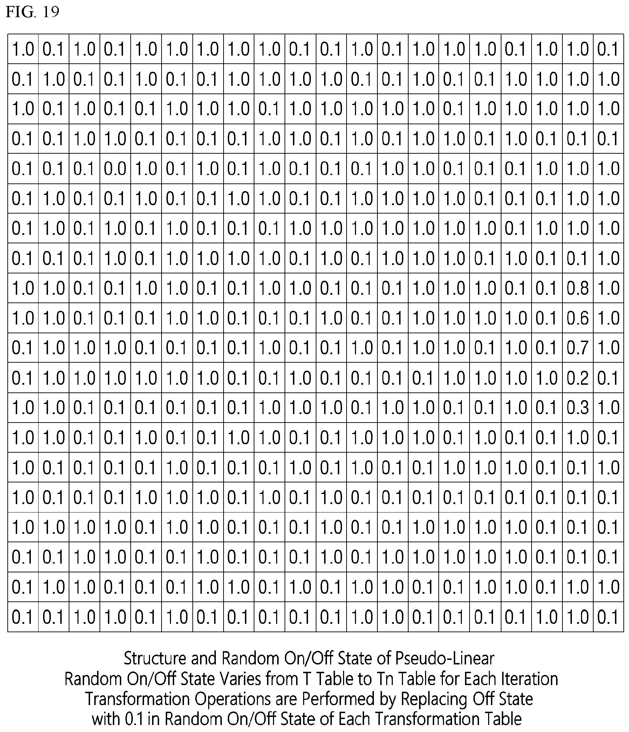

FIG. 19 is a drawing illustrating the structure of a transformation table with unique ranking values that act as operators during each iteration or stage of a pseudo-linear transformation, and shows the on/off state of each pair of coordinates.

Referring to FIG. 14, ① and ② respectively represent input 1, which is information on documents or images corresponding to initial input to be learned by the recognition program (i.e., the AI), and input 2, which corresponds to priority keywords that need to be primarily addressed, (3) and ④ represent the script extractor and/or executor, which provides means for dialogues or reviews of input materials for the recognition program, which corresponds to the AI and is marked with (5). (3) and ④ are utilized by the recognition program to extract necessary data and calculate frequency values using a system language such as Perl scripts for searching for powerful documents or input file information.

Perl scripts may perform functions such as word extraction, adjacent word extraction, basic searching and statistics for sentence similarity, etc. The AI collects and performs feedback on analytical data through a special interface of the embedded script syntax and stores a 2D information table with particular information or the results of learning of the 2D information table to be matched to coordinates of a 2D coordinate table.

The 2D coordinate table is based on coordinates with information axes for inputs 1 and 2.

The information axes may be converted into vertical lines for the convenience of calculation. A stop command is executed to set initial conditions for how many iterations of learning the AI needs to perform. If no particular initial conditions are given, the AI, the recognition program, undergoes n pseudo-linear transformations until values in a characteristic vector table or a characteristic table hardly change, as in continuing learning until finding deep truth values that do not need any further feedback or computation, by calculating the eigenvalues and eigenvectors of a matrix. The information axes may be converted into vertical lines for the convenience of calculation. A stop command is executed to set initial conditions for how many iterations of learning the AI needs to perform. If no particular initial conditions are given, the recognition program (5) undergoes n pseudo-linear transformations until values in a characteristic vector table or a characteristic table hardly change, as in continuing learning until finding deep truth values that do not need any further feedback or computation, by calculating the eigenvalues and eigenvectors of a matrix. The AI operates in this manner in the absence of no particular input for the stop command (⑥). However, if the stop command is given, the AI's learning and operation are concluded along with the stop command, and the results of learning are output (^{©}).

FIG. 15 conceptually shows how the extraction of a script, the execution of the script, and the AI, which is the recognition program, interact. conceptually shows how the extraction of a script, the execution of the script, and the recognition program (i.e., the AI) corresponding to (3), ⓒ, and (5), respectively, of FIG. 14 interact. Referring to FIG. 15, it can be seen that the recognition program (i.e., the AI) searches for and analyzes necessary information and words by manipulating a script language. Thus, the recognition program continuously feed itself back using the script extractor/executor with inputs 1 and 2, generates a 2D information table and a 2D table coordinate system to create a coordinate distribution of knowledge with the importance of the knowledge in the form of popularity frequency values or ranking values, stores specific sentence information for such coordinates in a separate coordinate system of the same size, and continuously accumulates information matched to the coordinates.

FIGS. 16 and 17 illustrate the execution and operational concept of an AI feedback system. FIG. 16 shows how the script extractor/executor and the recognition program (i.e., the AI) produce an initial 2D information table through self-feedback and training using inputs 1 and 2 and match the knowledge corresponding to each pair of coordinates of the 2D information table to manage the coordinate system of the 2D information table. The processes of producing and managing the coordinate system from the inputs correspond to ①, (2), (3), and ④ of FIG. 16. Through these processes, pseudo-linear transformations for each coordinate system are performed to find real truth values, and to perform such pseudo-linear transformations, a linear transformation table of the same dimension is generated. The process of generating the transformation table of the same dimension for pseudo-linear transformations corresponds to (5) of FIG. 16.

FIG. 17 illustrates how the initial 2D information/knowledge table is transformed and deep truth values are derived using the pseudo-linear-transformed 2D table obtained by the processes of FIG. 16. The execution of n pseudo-linear transformations is as indicated by ⑦ of FIG. 17. Referring to FIG. 17, a 2D table composed of characteristic vectors and values is generated such that the values of the pseudo-linear-transformed 2D table remain unchanged or closest to the truth. This seeks to identify only necessary information coordinates that can truly be considered truth, with information matching the surviving coordinates becoming deep truth values. The process of deriving deep truth values is similar to finding eigenvalues and eigenvectors in a matrix, but the present invention differs from a matrix operation in that it involves performing a pseudo-linear transformation by multiplying, one-to-one, the coordinates of a 2D a pseudo-linear transformation table created to have each coordinate value randomly on or off for each stage, marked with unique ranking values, and the respective coordinates of a 2D information table of the same area. Such pseudo-linear transformations are a distinctive feature of the present invention.

FIG. 18 shows what pseudo-linear transformation specifically means in the context of the concepts presented in FIGS. 16 and 17. Referring to FIG. 18, the entire processes of FIG. 17 are summarized as a series of continuous operations for a T table for the pseudo-linear transformation of a 2D coordinate table, which is composed of the coordinate system of the original 2D information table and its corresponding coordinate values, into the same dimension, and can be viewed as a continuous combination of operations of an S table for characteristic table operations aimed at finding characteristic values or deep truth values. FIG. 18 conceptually demonstrates how the knowledge and learning content of the AI, matched at each coordinate value of such 2D coordinate table, survive heavily in the coordinate system and are derived as deep truth values. In n pseudo-linear transformations, unique ranking values may or may not be given to the respective coordinates depending on the random on/off state of each coordinate value. Specifically, in each iteration, each coordinate value switches between an on state and an off state. Thus, only coordinate values in the on state are maintained, while those in the off state are treated as zero. This means that the coordinate values in the off state do not affect the corresponding coordinates of the 2D information table where knowledge is matched during that iteration, rendering the knowledge at the corresponding coordinates as unimportant, while only the information at coordinates that are in the on state is recognized as being as much important as the weight of their corresponding ranking values. As a result, since the on/off states for each iteration vary randomly during n pseudo-linear transformations, it acts as an unpredictable popularity vote.

Consequently, if coordinates survive to the end to have relatively high significance and ranking values, their states are reflected so that a unique characteristic table and characteristic values are selected through operations by the unique characteristic table. This operates similarly to finding eigenvalues and eigenvectors in a matrix to determine ranks. However, this is different from matrix operations because it produces a table by operating a transformation table and a knowledge information table at the same locations. In other words, the innovative aspect of the present invention lies in its unique process of finding the unique characteristic table.

FIG. 19 illustrates how stages of a pseudo-linear transformation table, used for operations during the recognition program's feedback and derivation processes depicted in FIG. 18, are generated and configured. In FIG. 3, each stage of the pseudo-linear transformation table is configured to maintain their ranking values. To create a random on/off state in the same coordinate system, a 2D table where each pair of coordinates is randomly assigned either 1 or 0 in an unpredictable random manner is generated. By multiplying the corresponding sets of coordinates of the left and right tables in FIG. 19, a pseudo-linear transformation 2D table with the random on/off state is generated. This process, repeated n times for each iteration, results in n pseudo-linear transformations.

As previously mentioned, FIG. 6 illustrates the process of mapping each coordinate value of a 2D knowledge/information table, from which deep truth values are derived, to linear channels, particularly, mapping layers or the 2D knowledge/information table for generations or knowledge layers for generations up to an n-th generation. Specifically, a 2D knowledge/information table composed of deep truth values acquired from each generation is equivalent to a 2D grid coordinate system. Therefore, if the 2D coordinate system is, for example, an (n×n) 2D coordinate system, the coordinates of the 2D coordinate system may be mapped to (n×n) linear channels, and the channels indicated by the red bars in FIG. 7, marked with deep truth values for each generation, may be connected to the values of a knowledge layer marked with deep truth values related to the next generation.

Thus, by associating several knowledge layers in this manner, the context of knowledge can be inferred. FIG. 7 explains the process of organizing, by knowledge categories, pieces of knowledge constructed based on the content of deep truth values, connected across multiple generations, or deep knowledge using the repository.

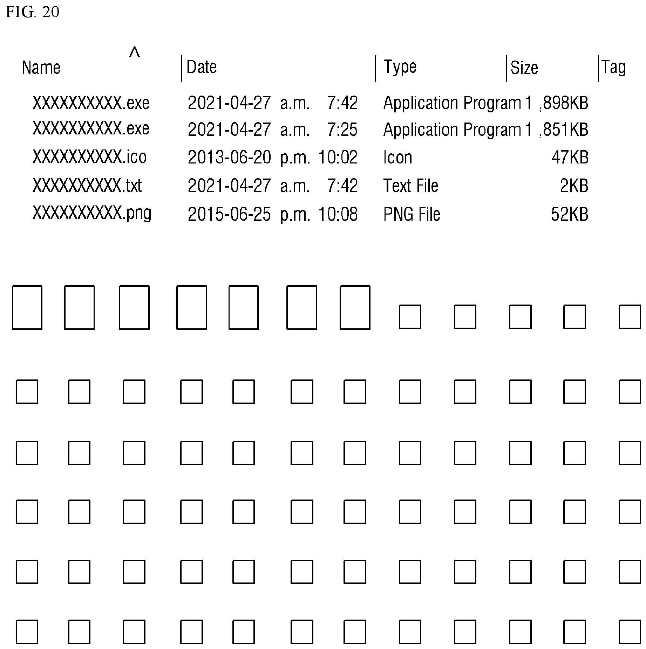

FIG. 20 demonstrates the results of AI training with at least some of the procedures depicted in FIGS. 13 through 19 reflected therein. FIG. 20 shows that more distinct results can be acquired when transformations of a transformation table are arbitrarily accumulated using various methods such as inversion, axis symmetry, point symmetry, and rotational symmetry, and on/off values are set to 1.0 and 0.1, respectively. To visualize the actual results, only cumulative values that reach a maximum under the condition that the outline intensity in each image is a popularity frequency value were selected and derived as optimal training values. To facilitate the identification of the results through visualization, additional training was conducted through images.

While the embodiments of the present invention have been described with reference to the accompanying drawings, it will be understood by those skilled in the art that the present invention can be implemented in other specific forms without changing the technical spirit or essential features thereof. Therefore, the embodiments described above should be considered in all respects as illustrative and not restrictive.

## Claims

1. An artificial intelligence (AI) feedback system comprising:
a script extractor/executor receiving input 1, which includes basic materials for learning, and input 2, which includes key contents for learning, and generating initial conditions for popularity frequency values or ranking values of information related to input 2 from input 1;
an AI connected to the script extractor/executor, the AI generating a two-dimensional (2D) information table in a matrix form with both axes for keywords and key information, respectively, based on popularity frequency values or ranking values derived from the initial conditions, adding the popularity frequency values or ranking values to corresponding coordinates of the 2D information table, and matching acquired knowledge to the corresponding coordinates;
an output unit connected to the AI and outputting deep truth values derived by the AI from the 2D information table; and
a repository connected to the AI, organizing and storing, by category, the context of knowledge formed by linking the deep truth values derived by the AI,
wherein
the AI generates a 2D pseudo-linear transformation table having the same area as the 2D information table, where the ranking values of the 2D information table are quantified and each pair of coordinates is randomly on or off; generates a 2D unique characteristic table where each pair of coordinates has a characteristic vector by performing multiple pseudo-linear transformations that operating the 2D pseudo-linear transformation table, and derives information of coordinates whose characteristic vectors do not change as the deep truth values; and converts the 2D unique characteristic table into one-dimensional (1D) linear channels for multiple generations with the deep truth values mapped thereto and stores the 1D linear channels in the repository by organizing the context of knowledge formed by linking the deep truth values of each of the 1D linear channels for multiple generations, and
as a number of iterations of operations increases, the 2D pseudo-linear transformation table reacts to operation transformations based on any one of directional rotation, inversion, and symmetry around a central point.

2. The AI feedback system of claim 1, wherein the 2D pseudo-linear transformation table reacts to the operation transformations based on any one of directional rotation, inversion, and symmetry around a central point after switching an on state to 1 and an off state to 0.1.

3. The AI feedback system of claim 2, wherein
input 1 includes a plurality of image files, and
input 2 includes contour intensities.

4. The AI feedback system of claim 2, wherein
input 1 includes a plurality of document files, and
input 2 includes set words.

5. An artificial intelligence (AI) feedback method comprising:
providing input 1, which includes basic materials for learning, and input 2, which includes key contents for learning, to a script extractor/executor;
providing, by the script extractor/executor, initial conditions for popularity frequency values or ranking values of information related to input 2, obtained from input 1, to an AI;
generating, by the AI, a two-dimensional (2D) information table in a matrix form with both axes for keywords and key information, respectively, based on popularity frequency values or ranking values derived from the initial conditions;
adding, through intersections between the AI and the script extractor/executor, the popularity frequency values or ranking values to corresponding coordinates of the 2D information table and matching acquired knowledge to the corresponding coordinates;
generating, by the AI, a 2D pseudo-linear transformation table having the same area as the 2D information table, where the ranking values of the 2D information table are quantified and each pair of coordinates is randomly on or off;
generating, by the AI, a 2D unique characteristic table where each pair of coordinates has a characteristic vector by performing multiple pseudo-linear transformations that operating the 2D pseudo-linear transformation table, and deriving information of coordinates whose characteristic vectors do not change as the deep truth values; and
converting, by the AI, the 2D unique characteristic table into one-dimensional (1D) linear channels for multiple generations with the deep truth values mapped thereto and storing the 1D linear channels in a repository by organizing the context of knowledge formed by linking the deep truth values of each of the 1D linear channels for multiple generations,
wherein as a number of iterations of operations increases, the 2D pseudo-linear transformation table reacts to operation transformations based on any one of directional rotation, inversion, and symmetry around a central point.

6. The AI feedback method of claim 5, wherein the 2D pseudo-linear transformation table reacts to the operation transformations based on any one of directional rotation, inversion, and symmetry around a central point after switching an on state to 1 and an off state to 0.1.
